# EUROPEAN PATENT APPLICATION

(11) **EP 3 537 411 A1**
(43) Date of publication of application: **11.09.2019**
(21) Application number: 18161034.6
(22) Date of filing: 09.03.2018
(51) Int. Cl.: G09B 19/20, G09B 5/06

(54) **METHOD AND SYSTEM FOR INSTRUCTING A USER, PARTICULARLY FOR HANDCRAFTS**

(71) Applicant: GESKO GmbH Garn- und Gewebe-Vertrieb, 82031 Grünwald (DE)
(72) Inventor: Rohlfs, Robert, 82418 Murnau (DE); Rohlfs, Corina, 81479 München (DE)
(74) Representative: Stellbrink & Partner Patentanwälte mbB

(57) **Abstract**

The present invention relates to a method of instructing a user (1000) performing a task, e.g., a handcraft task, the method comprising: capturing images while the user (1000) performs the task, and a user terminal (10) outputting instructions to the user (1000), wherein the output instructions depend on the captured images. The present invention also relates to a corresponding system and use.

## Description

The present invention generally relates to a user instruction. While the present invention will be described primarily with regard to an instruction for handcraft work (e.g., knitting and crocheting), it should be understood that the invention is also applicable to other fields, such as cooking, as well as repair and maintenance.

E.g., when a user knits a garment, they usually do it according to an instruction. Presently, such instructions are typically written instructions and the user reads them either on paper, on a computer, tablet, or smartphone. While some instructions (e.g., cooking instructions) may be relatively simple and easy to understand, other instructions - e.g., instructions for knitting, or repairing a technical device - may be more complicated and/or require knowledge of special terminology that not every user may have.

For example, knitting or crocheting (or other types of handicrafts) may be difficult when following instructions. E.g., knitting instructions use their own language and symbols to provide instructions, which must first be learned. The knitter continuously has to count and check whether he/she is still following the instructions and in order to know when and how the next step must be performed.

Further, following instructions while doing handicrafts requires the person doing handicrafts to continuously track his or her own work progress. For example, the person doing handicrafts must know, while knitting, the row and the stitch he/she is currently working on, in order to read the appropriate correct further work directions from the instructions. In other words, the person doing handicrafts has to match the process step they are currently working on with steps provided in the instruction.

Handicrafts instructions provide the person doing handicrafts with a sequence of work steps which must be implemented in the specified sequence in order to achieve the desired work result. As discussed, various forms of these instructions are known: text-only forms, combinations of text and graphic illustrations or even video recordings showing the correct implementation of the work steps and their sequence. Many handicrafts instructions can only be read by persons doing handicrafts who dispose of certain previous experience. Persons doing handicrafts with less experience tend to be deterred and do not even try to use these instructions.

With known forms of instructions, the person doing handicrafts is required to record the progress of his/her work in order to be able to identify the next correct step and to continue to read/record the instruction at that point and then to comply with it. There are applications which permit manual entry of the knitted stitches and rows. All these methods require the attention of the persons doing handicrafts and interruptions of the work process at regular intervals in order to record their progress. For persons doing handicrafts, e.g. while knitting, such interruptions and the attention they require are not desired. The attention of the person doing the work may be diverted from the actual work, which may lead to inferior results, both as regards quality (i.e., the person may be more prone to mistakes) and as regards efficiency (i.e., a handicraft project or task requiring more time than would actually be necessary). Further, this requires concentration and effort by the user. As some users do handicrafts to relax themselves, this may contradict this purpose of doing handicrafts.

Thus, the result of the work the user is performing may be far from optimal. In particular, the user may need more time than would normally be required for the task, the task may not be performed satisfactorily (e.g., the garment may not be knitted as desired), thus requiring the task to be performed repeatedly. This may be far from optimal as regards time efficiency, technical results of the task, and this may also require more physical resources (e.g., when materials need to be discarded) than would be necessary.

The present invention seeks to overcome or at least alleviate the shortcomings and disadvantages of the prior art. There is a demand for an improved technology as regards instructions to the persons doing handicrafts depending on their work progress, with the persons doing handicrafts requiring / intending to devote as little attention as possible to recording their progress.

In a first embodiment, the present technology relates to a method of instructing a user performing a task. The method comprises: capturing images while the user performs the task, and a user terminal outputting an instruction to the user, wherein the output instruction depends on the captured images.

In this specification, the term task may also be exchanged with the terms project or activity.

That is, in embodiments of the present technology, the task is monitored by a system, and the user is provided with instructions depending on the monitoring. Thus, the system may give feedback depending on the images it captures. In other words, the task may be monitored by the system. This may be different to prior art system, where the user had to monitor their progress and potentially communicate (e.g., enter) it manually.

Thus, the present technology supplies instructions to the user depending on the images captured (and thus, on the progress of the user). That is, the user no longer needs to locate themselves in a complicated instruction, but this may be done automatically. Thus, the user may focus their attention on the actual task and not on their progress with regard to an instruction, which may be difficult to read and understand. Thus, the task may be performed faster and with less mistakes.

The task may comprise a plurality of steps.

The task may comprise at least 10, preferably at least 100, further preferably at least 1000 steps.

The present technology may be particularly useful if the task (e.g., knitting a garment) does not only comprise a single step, but in fact a plurality of different steps, as such tasks may be harder to perform.

The images may be captured by a camera.

The user terminal may comprise the camera.

This may lead to a particularly minimal and simple solution for instructing a user.

The user terminal may be a personal computer, a tablet, a smartphone, or a smart speaker.

In one embodiment, the task may be selected from the group consisting of: a food or drink preparation task, such as cooking, baking or preparing mixtures; a repairing or servicing task, such as repairing or servicing machine, equipment, instruments, cars, and/or ships; an assembling task, such as assembling any kind of household appliances, device or furniture; and a construction task, which may comprise manipulations and assembling of different materials according to a set of instructions. Examples of construction tasks include bricking, tiling, woodwork, and other tasks relating to the household, decoration and living.

In another embodiment, the task may be a handcraft task.

The task may be a crocheting task.

The task may be a knitting task.

Further examples of handcraft tasks include tasks with paper, potter's clay, felt, and others.

As discussed, using the present technology with such tasks may be particularly advantageous, as such tasks (if compared, e.g., cooking) may typically require more complex and complicated instructions, which may require knowledge of certain terminology. The present technology may replace such complicated instructions and may thus render performing such handcraft tasks more failsafe and less prone to mistakes.

Outputting an instruction to the user may comprise the user terminal displaying the instruction.

This may be particularly advantageous, as the user may be provided with visual instructions as regards their task.

Outputting an instruction to the user may also comprise the user terminal generating a sound corresponding to the instruction.

Also this option may be advantageous. When outputting the instructions by means of a sound, the user may still focus their visual attention on the task to be performed. Thus, this option may lead to the user performing the task rapidly.

The method may further comprise a data processing unit processing image data relating to the captured images. It will be understood that in some embodiments, the image data may be video image data.

The method may further comprise:
the data processing unit determining a progress of the user in the task based on the processed image data;
wherein the output instruction depends on the determined progress of the user.

That is, the data processing unit may automatically determine the progress the user has made and may output instructions depending on this determination. For example, when the unit determines that the user has made a progress corresponding to 8 out of 20 steps, the unit may output instructions relating to the 9^{th} step.

The data processing unit may comprise a data storage section comprising a data set corresponding to the task, the data set comprising data portions each corresponding to a step of the task, wherein the step of determining a progress of the user in the task comprises matching the image data to a data portion in the data set.

As stated, the data set may correspond to the task. In other words, the data set may correspond to a set of steps or instructions of the task, e.g., the knitting task. The image data may be matched to the data set, i.e., it may be matched to the steps or instructions in the data set. Again, when, e.g., considering a task with 20 steps, the system may use the image data to determine where, i.e., at which step, the user currently is. Thus, the image data may be processed and matched to a corresponding data portion (e.g., corresponding to a step or a specific instruction).

The status of the progress in the work may be determined either by making an image of the complete work, thus calculating at which step the user (e.g., knitter) is, or by continuously following each step along the way and thus tracking the progress. Again referreing to knitting a garment, such a task may contain hundreds or thousands of individual steps (= stitches). In such tasks, it may be preferable to track the steps in the work continuously.

The data set may comprise at least 10 data portions, preferably at least 100 data portions, and further preferably at least 1,000 data portions.

Again, the presently described technology may in particular be used for tasks having a plurality of different steps and the present technology may locate a progress in the task with regard to such a plurality of steps. Thus, the present technology may also employ such a plurality of data portions and match the image data to a data portion of such a plurality of data portions.

It will be understood that in some embodiments of the present technology, single images in the image data may be matched to a corresponding data portion. That is, the progress of the user may be determined based on single images. However, in other embodiments, a plurality of images, e.g., corresponding to a video sequence, may be matched to a data portion. In some embodiments, it may be easier to determine a content in image data based on a plurality of images (e.g., a video sequence) than on single images.

The step of matching the image data to a data portion in the data set may comprise pattern recognition and/or action recognition.

The step of matching the image data to a data portion in the data set may comprise utilization of artificial intelligence and/or a neural network.

This may be a particularly useful way of matching the image data to a data portion, e.g., a particular instruction and/or a particular stored step of the task.

In the step of matching image data to a data portion in the data set, image data corresponding to an image captured at a capture time may be matched to a data portion in the data set by taking into account
the image data corresponding to the image captured at the capture time, and
image data corresponding to an image captured before said capture time.

That is, in embodiments of the present technology, not only the presently captured image, but also one or more images captured beforehand may be taken into account to determining the user's progression at the capture time of the presently captured image.

It will be understood that the previously captured image data may be taken into account in a variety of ways. In a first option, such previous image data may be taken into account "directly", i.e., the previous image data may be processed when matching the image data corresponding to the capture image to a data portion - e.g., to determine the progress at the capture time, the image captured at the capture time is taken into account and also previously captured images are taken into account.

In a second option, the previous image data is not directly taken into account, but indirectly. That is, not the previous image data as such is taken into account, but, e.g., a matching result of such previous image data. For example, for determining the progress of a user at a capture time of an image, also the results of the previously 5 images is taken into account. Again with reference to knitting, if the capture time is denoted CT, and the five previously captured images are captured at capture times CT - 5, CT - 4, CT - 3, CT - 2, CT - 1, the images captured beforehand may have yielded the following matching results:

| Capture time | Matching result (which data portion, i.e., which step) | Corresponds to |
|---|---|---|
| | | |
| CT - 5 | 2 | Row 2, Stitch 6 |
| CT - 4 | 2 | Row 2, Stitch 6 |
| CT - 3 | 3 | Row 2, Stitch 7 |
| CT - 2 | 3 | Row 2, Stitch 7 |
| CT - 1 | 3 | Row 2, Stitch 7 |

That is, the images captured at capture times CT - 5 and CT - 4 may have been matched to data portion 2, corresponding to step 2 of an instruction, and the images captured at capture times CT - 3, CT - 2, CT - 1 may have been matched to a data portion 3, corresponding to step 3 of an instruction.

When now matching the image at capture time CT to a data portion, the above results may also be taken into account, i.e., it may be more likely that the matching result will yield step 3 or 4 than any other results.

By also taking into account such image data captured before the capture time CT, the present technology may be more robust and failsafe.

Generally, it may be registered that a step (e.g., step 2) is completed and thus determine when step 3 is completed.

Further, in order to determine if a stitch has been completed correctly the system may capture a sequence of e.g. 3 images at different stages of making the stitch and only if those 3 pics are registered the step /stich is reckoned to be completed.

In realizations of the present invention it may be advantageous to also capture the time while a certain activity is being executed or how long some process is lasting. When cooking or working on construction it may be beneficial to capture the time during which something is being stirred, or how long something is fried, cooked, or baked, as well as something is drying like glue, paint or filling material.

In the step of matching image data to a data portion in the data set, an image data portion corresponding to a section of a video may be simultaneously matched to a data portion in the data set. Matching the image data portion to a data portion in the data set may comprise utilization of action recognition

The user terminal may comprise the data processing unit.

Such embodiments may be advantageous as they do not require sending data while performing the task. In other words, the processing may be done locally and thus, no delay by sending data while performing the task may be caused.

Alternatively, a server external to the user terminal may comprise the data processing unit.

Such embodiments may have the advantage of an external server performing the processing, which external server may not have the same limitations as regards computing power as the local devices do.

The method may further comprise sending image data from the user terminal to the server.

The image data may be compressed before sending.

Thus, less data needs to be sent, which may prevent (or at least decrease) any delays caused by sending data. For example, the image data may be compressed according to the MPEG standard before sending.

The method may further comprise sending data indicative of the output instruction from the server to the user terminal.

The sent data may be encrypted.

The method may further comprise the user terminal outputting a positioning instruction instructing the user to position themselves and/or equipment used for the task in a field of view of the camera.

It will be understood that for the described technology, it may be beneficial that the user and/or the equipment for the task is in the field of view of the camera (and ideally, substantially completely in the field of view of the camera). In particular when this condition is not met (or not met sufficiently), the present technology may determine this and output instructions to the user to position themselves and/or the equipment in the camera field of view. This may render the present technology more robust still.

The method may further comprise the data processing unit determining whether the image data is sufficient for further processing and the positioning instruction may be output if the image data is not sufficient for further processing.

The method may further comprise the user terminal outputting a status information to the user, wherein the status information depends on the captured images.

Again as an example relating to knitting, the user terminal may output a status like: "You are currently knitting the second row."

The method may further comprise the user terminal receiving an affirmative input indicating that the output status information is correct.

The method may further comprise the user terminal receiving a dissenting input indicating that the output status is incorrect.

That is, in general words, the user may input information relating to the output status information. E.g., when the status is correct, the user may indicate this to the system. However, when the output status is incorrect, the user may also indicate this to the system. In embodiments, the user may also correct the status, e.g., enter the correct status into the system. Thus, the status may be corrected, which may also be taken into account for the subsequent determination of the user's progress.

The status information may depend on the determined progress of the user.

The method may further comprise capturing images while the user performs a defined calibration task; and the user terminal receiving a user input relating to parameters of the defined calibration task. In some embodiments, at least some images captured while the user performed the defined calibration task are transferred to the server and are used to train a neural network to recognize an execution of the instruction.

The method may further comprise the user terminal receiving a task user input relating to one or more parameters of the task; and the data processing unit adapting the data set depending on the task user input.

In other words, in some embodiments, the present technology may also adjust the data set and its data portions, e.g., relating to instructions. For example, in a knitting project, the user may input parameters, such as size, yarn and stitch density and the instructions may be converted automatically. Thus, this complex conversion is done automatically by the system, again reducing effort of the user, who can thus focus on the actual task to be performed.

The method may further comprise determining the presence of an error based on the image data and the data set; and the user terminal outputting an error message and/or a correction instruction to the user.

It will be understood that the user may sometimes not comply with the instructions and make mistakes. Again referring to knitting, e.g., the user may be required to do 6 purl stitches, but may only do 5 purl stitches and then begin with the next row. Embodiments of the present technology may detect this (by comparing image data to the data set) and may then output an error message and/or a correcting instruction to the user.

The present technology may monitor the correct execution of the steps to be taken regarding different aspects of the execution and may provide instructions relating to aspects, which aspects may comprise
using the correct material (e.g. usage of the correct colour, using the correct type of screw when assembling or repairing, adding the correct ingredient when cooking);
using the correct tool (e.g. usage of the correct needle type or size, usage of the correct screwdriver);
working in the correct location (e.g. adding a screw in the correct place, or locating tiles at the correct place, when crocheting adding new stiches at the correct part of the work piece);
moving or turning the correct direction (e.g. making sure not turning a screw to the left instead of to the right, turning the knitting work in the correct direction, making sure not pushing instead of pulling);
executing the correct action (e.g. making a plain stitch instead of making a purl stitch);
executing with the correct speed (e.g. not stirring fast when supposed to stir slowly);
letting pass the correct amount of time or executing something for the correct amount of time (e.g. making sure not cooking something too long, not letting something dry too short of a time, not stirring long enough); and/or
execution of the steps in the correct sequence (e.g. adding new stiches not too early in the process, adding ingredients when cooking or preparing mixtures for construction in the correct order).

Incorrect execution can be detected during or before the execution and corrective instructions can be given immediately.
The user terminal may output a plurality of instructions to the user, which output instructions depend on the captured images, and the method may further comprise interrupting outputting the plurality of instructions at an interrupting instruction, and resuming outputting of the plurality of instructions at the interrupting instruction or at an instruction following the interrupting instruction.

The method may further comprise at least one of the following steps executed before resuming outputting the plurality of instructions: the user terminal receiving an input relating to a progress of the task after interrupting outputting and before resuming outputting the plurality of instructions; capturing at least one resuming image after interrupting outputting the plurality of instructions and determining a progress based on this at least one resuming image.

Thus, the user is not required to complete a task at once, but may halt execution of the task and resume it at a later stage.

The method may further comprise the user terminal outputting an assisting image and/or an assisting video depending on the captured images.

This may further help the user to correctly perform the task. In other words, embodiments of the present technology may also relate to illustrations and directions for specific steps (e.g., knitting methods).

When the method relates to a handcraft task, the output instruction may indicate at least one of a yarn color, a stitching type, and a number of stitches, and preferably at least two thereof.

The determination of the progress of the user in the task may be done depending on at least a number of stitches.

The positioning instruction may relate to a position of knitting needles with respect to the camera.

The output status information may relate to at least one of a row number and number of stitches.

The data storage section may comprise a plurality of data sets, wherein each data set corresponds to a separate task, respectively, and each data set comprises data portions, wherein each data portion corresponds to a step of the respective task, and the method may further comprise the user terminal receiving a user input relating to a selection of one of the plurality of data sets.

Thus, the user may select a data set of a group data sets, each data set corresponding to a particular task (e.g., knitting a jumper, knitting a hat, and knitting a cardigan).

In the step of capturing images while the user performs the task, images of at least a part of the user may be captured.

The part may include at least part of the user's hands.

The present technology also relates to a system configured for carrying out the method discussed above. The system comprises the user terminal, and the camera.

The user terminal may comprise the camera.

The user terminal may be a personal computer, a tablet, a smartphone, or a smart speaker.

The user terminal may comprise a display and/or speakers.

The system may further comprise the data processing unit.

The data processing unit may further comprise the data storage section.

The user terminal may comprise the data processing unit.

The system may further comprise the server.

The user terminal may comprise an input user interface.

The input user interface may comprise at least one of a keyboard, touch sensitive display, and a microphone.

The method may comprise the user terminal outputting a plurality of instructions to the user, wherein the output instructions depend on the captured images.

The plurality of instructions may comprise at least 10, preferably at least 100, further preferably at least 200, such as at least 1,000 instructions. These instructions may depend on the captured images.

It will be understood that the features discussed above relating to an instruction may also be employed for the plurality of instructions.

The instructions may be continuously output to the user, preferably for at least 1 minute, further preferably at least 5 minutes, such as at least 10 minutes.

The present technology also relates to a method of generating an instruction set for a task performed by a user, the method comprising: capturing images while user performs the task; determining steps in the task based on the images; and generating instructions corresponding to the steps.

That is, the present technology may also be used in "reverse". Thus, also a technology for automatically generating an instruction set (i.e., a manual) may be provided.

This method may comprise any of the features recited above. Furthermore, it may also be combined with the above method of instructing a user. That is, the present technology also relates to an instruction set first being generated by monitoring a first user and this instruction set then being used to instruct a second user.

The present technology also relates to a use of the discussed system for carrying out the discussed method.

It will be understood that the discussed system and the discussed use may have advantages corresponding to the ones discussed above in conjunction with the method.

Generally, embodiments of the present technology relate to methods for identification of the progress and the performed task with regard to instructions by means of recorded image data and using image processing and continuous instructions for the user which are created based on these.

That is, in general words, embodiments of the present technology relate to interactive instructions for tasks, e.g., handicrafts (e.g. knitting or crocheting or other activities) via a user terminal (e.g., smartphones). The progress of the task is recorded via image recognition processes and based thereupon, the user (for example, the knitter) is provided with the correct directions.

Put differently, embodiments of the present technology relate to a method for identification of progress while doing handicrafts based on image data and the continuous instruction of the user (e.g., knitter) as regards the subsequent steps in handicrafts depending on his/her work progress.

In still other words, embodiments of the presently described technology relate to recording, by means of the data from an image recording device and a computer unit, the progress of handicraft based on the data of an instruction, and subsequently using this 1. in order to provide the user with information about the progress, and 2. in order to determine, indicate and track the subsequent steps. Moreover, the user may be enabled to correct the position of the progress of his/her work in the instructions via entries.

Embodiments relate to methods for directing a person doing handicrafts when knitting or crocheting, wherein the method comprises: receiving image (e.g., video data) from a terminal of the user in a processing unit, wherein the current processing progress is determined in a processing unit, recording the current total progress within a "navigation unit", with the previous status of the work continued by the new work step, identification of the position of the work progress in given instructions, creating or retrieving and outputting notifications about the work status, creating or retrieving and outputting work directions depending on the current work progress of the person doing handicrafts and according to the underlying instructions, and recording corrective information about the work progress achieved by the user. That is, embodiments of the present technology may utilize any of the steps recited in this paragraph.

In embodiments, the present technology may be realized by means of an "app" and a "web store". A user may purchase instructions (i.e., data sets) in the web store and they can be transferred to the app.

Such an app may, with the help of a smartphone camera and visual image recognition processes (e.g., based on openCV program libraries), detect "live" the progress during a task, such as knitting, and then direct the user in a reactive and targeted fashion as to how to continue the task (and may include audio and video help feature).

Thus, with the help of the app, all the difficulties specified above in implementing the knitting instructions can be simplified for the knitter.

The present invention is also defined by the following numbered embodiments.

Below, method embodiments are discussed. These embodiments are abbreviated by the letter M followed by a number. Whenever reference is herein made to a method embodiment, these embodiments are meant.
M1. A method of instructing a user (1000) performing a task, the method comprising capturing images while the user (1000) performs the task, and a user terminal (10) outputting an instruction to the user (1000), wherein the output instruction depends on the captured images.
   In this specification, the term task may also be exchanged with the terms project or activity.
M2. The method according to the preceding embodiment, wherein the task comprises a plurality of steps.
M3. The method according to the preceding embodiment, wherein the task comprises at least 10, preferably at least 100, further preferably at least 1,000 steps.
M4. The method according to any of the preceding embodiments, wherein the images are captured by a camera (12).
M5. The method according to the preceding embodiment, wherein the user terminal (10) comprises the camera (12).
M6. The method according to any of the preceding embodiments, wherein the user terminal (10) is a personal computer, a tablet, a smartphone, or a smart speaker.
M7. The method according to any of the preceding embodiment, wherein the task is selected from the group consisting of:
   - a food or drink preparation task, such as cooking, baking or preparing mixtures; and
   - a repairing or servicing task, such as repairing or servicing machine, equipment, instruments, cars, and/or ships or parts thereof;
   - an assembling task, such as assembling any kind of household appliances, device or furniture;
   - a construction task, which may comprise manipulations and assembling of different materials according to a set of instructions.
   Examples of construction tasks include bricking, tiling, woodwork, and other tasks relating to the household, decoration and living.
M8. The method according to any of the embodiments M1 to M6, wherein the task is a handcraft task.
M9. The method according to the preceding embodiment, wherein the task is a crocheting task.
M10. The method according to the penultimate embodiment, wherein the task is a knitting task.
   Further examples of handcraft tasks include tasks with paper, potter's clay, felt, and others.
M11. The method according to any of the preceding embodiments, wherein outputting an instruction to the user (1000) comprises the user terminal (10) displaying the instruction.
M12. The method according to any of the preceding embodiments, wherein outputting an instruction to the user (1000) comprises the user terminal (10) generating a sound corresponding to the instruction.
M13. The method according to any of the preceding embodiments, wherein the method further comprises a data processing unit processing image data relating to the captured images.
M14. The method according to the preceding embodiments and further comprising
   the data processing unit determining a progress of the user (1000) in the task based on the processed image data;
   wherein the output instruction depends on the determined progress of the user (1000).
M15. The method according to the preceding embodiment and with the features of embodiment M2,
   wherein the data processing unit comprises a data storage section comprising a data set corresponding to the task, the data set comprising data portions each corresponding to a step of the task,
   wherein the step of determining a progress of the user (1000) in the task comprises matching the image data to a data portion in the data set.
M16. The method according to the preceding embodiment and with the features of embodiment M3, wherein the data set comprises at least 10 data portions, preferably at least 100 data portions, and further preferably at least 1,000 data portions.
M17. The method according to any of the 2 preceding embodiments, wherein the step of matching the image data to a data portion in the data set comprises pattern recognition and/or action recognition.
M18. The method according to any of the 3 preceding embodiments, wherein the step of matching the image data to a data portion in the data set comprises utilization of artificial intelligence and/or a neural network.
M19. The method according to any of the preceding 4 embodiments, wherein in the step of matching image data to a data portion in the data set, image data corresponding to an image captured at a capture time is matched to a data portion in the data set by taking into account
   the image data corresponding to the image captured at the capture time, and
   image data corresponding to an image captured before said capture time.
   It will be understood that the previously captured image data may be taken into account in a variety of ways. In a first option, such previous image data may be taken into account "directly", i.e., the previous image data may be processed when matching the image data corresponding to the capture image to a data portion. In a second option, the previous image data is not directly taken into account, but indirectly. That is, not the previous image data as such is taken into account, but, e.g., a matching result of such previous image data.
M20. The method according to any of the 4 preceding embodiments, wherein in the step of matching image data to a data portion in the data set, an image data portion corresponding to a section of a video is simultaneously matched to a data portion in the data set.
M21. The method according to the preceding embodiment, wherein matching the image data portion to a data portion in the data set comprises utilization of action recognition.
M22. The method according to any of the preceding 9 embodiments, wherein the user terminal (10) comprises the data processing unit.
M23. The method according to any of the embodiments M13 to M21, wherein a server (50) external to the user terminal (10) comprises the data processing unit.
M24. The method according to the preceding embodiment, wherein the method further comprises sending image data from the user terminal (10) to the server (50).
M25. The method according to the preceding embodiment, wherein the image data is compressed before sending.
M26. The method according to any of the 3 preceding embodiments, wherein the method further comprises sending data indicative of the output instruction from the server (50) to the user terminal (10).
M27. The method according to any of the 3 preceding embodiments, wherein the sent data is encrypted.
M28. The method according to any of the preceding embodiments with the features of embodiment M4, wherein the method further comprises the user terminal (10) outputting a positioning instruction instructing the user (1000) to position themselves and/or equipment used for the task in a field of view of the camera (12).
M29. The method according to the preceding embodiment and with the features of embodiment M13, wherein the method further comprises the data processing unit determining whether the image data is sufficient for further processing and wherein the positioning instruction is output if the image data is not sufficient for further processing.
M30. The method according to any of the preceding embodiments, wherein the method further comprises the user terminal (10) outputting a status information to the user (1000), wherein the status information depends on the captured images.
M31. The method according to the preceding embodiment, wherein the method further comprises
   the user terminal (10) receiving an affirmative input indicating that the output status information is correct.
M32. The method according to any of the 2 preceding embodiments, wherein the method further comprises
   the user terminal (10) receiving a dissenting input indicating that the output status is incorrect.
M33. The method according to any of the 3 preceding embodiments and with the features of embodiment M14, wherein the status information depends on the determined progress of the user (1000).
M34. The method according to any of the preceding embodiments, wherein the method further comprises
   capturing images while the user (1000) performs a defined calibration task; and
   the user terminal (10) receiving a user input relating to parameters of the defined calibration task.
M35. The method according to any of the preceding embodiments and with the features of embodiment M15, wherein the method further comprises
   the user terminal (10) receiving a task user input relating to parameter of the task; and
   the data processing unit adapting the data set depending on the task user input.
M36. The method according to any of the preceding embodiments and with the features of embodiment M15,
   wherein the method further comprises determining the presence of an error based on the image data and the data set; and
   the user terminal (10) outputting an error message and/or a correction instruction to the user (1000).
M37. The method according to any of the preceding embodiments, wherein the user terminal (10) outputs a plurality of instructions to the user (1000), which output instructions depend on the captured images, and wherein the method further comprises
   interrupting outputting the plurality of instructions at an interrupting instruction, and
   resuming outputting of the plurality of instructions at the interrupting instruction or at an instruction following the interrupting instruction.
M38. The method according to the preceding embodiment, wherein the method further comprises at least one of the following steps executed before resuming outputting the plurality of instructions:
   the user terminal (10) receiving an input relating to a progress of the task after interrupting outputting and before resuming outputting the plurality of instructions;
   capturing at least one resuming image after interrupting outputting the plurality of instructions and determining a progress based on this at least one resuming image.
M39. The method according to any of the preceding embodiments, wherein the method further comprises the user terminal (10) outputting an assisting image and/or an assisting video depending on the captured images.
M40. The method according to any of the preceding embodiment and with the features of embodiments M8, M9 or M10, wherein the output instruction indicates at least one of a yarn color, a stitching type, and a number of stitches, and preferably at least two thereof.
M41. The method according to any of the preceding embodiments and with the features of embodiments M8, M9, or M10 and M14, wherein the determination of the progress of the user (1000) in the task is done depending on at least a number of stitches.
M42. The method according to any of the preceding embodiments and with the features of embodiments M10 and M28, wherein the positioning instruction relates to a position of knitting needles with respect to the camera (12).
M43. The method according to any of the preceding embodiment and with the features of embodiments M10 and M30, wherein the output status information relates to at least one of a row number and number of stitches.
M44. The method according to any of the preceding embodiments and with the features of embodiment M15,
   wherein the data storage section comprises a plurality of data sets, wherein each data set corresponds to a separate task, respectively, and each data set comprises data portions, wherein each data portion corresponds to a step of the respective task,
   wherein the method further comprises the user terminal (10) receiving a user input relating to a selection of one of the plurality of data sets.
M45. The method according to any of the preceding embodiments, wherein in the step of capturing images while the user (1000) performs the task, images of at least a part of the user (1000) are captured.
M46. The method according to the preceding embodiment, wherein the part includes at least part of the user's hands.
M48. The method according to any of the preceding embodiments with the features of embodiments M22 and M34, wherein at least some images captured while the user (1000) performs the defined calibration task are transferred to the server (50) and are used to train a neural network to recognize an execution of the instruction.
M49. The method according to any of the preceding embodiments and with the features of embodiment M13, wherein the image data comprises video image data.
   As an example, this may relate to execution of a purl stitch with the red yarn being used for the project.
M50. The method according to any of the preceding embodiments, wherein the method comprises
   the user terminal (10) outputting a plurality of instructions to the user (1000),
   wherein the output instructions depend on the captured images.
M51. The method according to the preceding embodiment, wherein the plurality of instructions comprise at least 10, preferably at least 100, further preferably at least 200, such as at least 1,000 instructions, which depend on the captured images.
M52. The method according to any of the 2 preceding embodiments, wherein the instructions are continuously output to the user (1000), preferably for at least 1 minute, further preferably at least 5 minutes, such as at least 10 minutes.
M53. A method of generating an instruction set for a task performed by a user (1000), the method comprising
   capturing images while user (1000) performs the task;
   determining steps in the task based on the images; and
   generating instructions corresponding to the steps.
M54. The method according to the preceding embodiment, wherein the method comprises any of the features recited in embodiments M1 to M52.

Below, system embodiments are discussed. These embodiments are abbreviated by the letter S followed by a number. Whenever reference is herein made to a system embodiment, these embodiments are meant.
S1. A system (2) configured for carrying out the method according to any of the preceding method embodiments with the features of embodiment M4, wherein the system (2) comprises
   the user terminal (10), and
   the camera (12).
S2. The system (2) according to the preceding embodiment, wherein the user terminal (10) comprises the camera (12).
S3. The system (2) according to any of the preceding system embodiments, wherein the user terminal (10) is a personal computer, a tablet, a smartphone, or a smart speaker.
S4. The system (2) according to any of the preceding system embodiments, wherein the user terminal (10) comprises a display and/or speakers.
S5. The system (2) according to any of the preceding system embodiments, wherein the system is configured to carry out a method with the features of embodiment M13, wherein the system (2) further comprises the data processing unit.
S6. The system (2) according to any of the preceding system embodiments, wherein the system is configured to carry out a method with the features of embodiment M15, wherein the data processing unit further comprises the data storage section.
S7. The system (2) according to any of the 2 preceding embodiments, wherein the user terminal (10) comprises the data processing unit.
S8. The system (2) according to any of the embodiments S5 to S6, wherein the system is configured to carry out a method with the features of embodiment M21, wherein the system (2) further comprises the server (50).
S9. The system (2) according to any of the preceding system embodiments, wherein the system is configured to carry out a method with the features of embodiment M29 and/or M30, wherein the user terminal (10) comprises an input user interface.
S10. The system (2) according to the preceding embodiment, wherein the input user interface comprises at least one of a keyboard, touch sensitive display, and a microphone.

Below, use embodiments are discussed. These embodiments are abbreviated by the letter U followed by a number. Whenever reference is herein made to a use embodiment, these embodiments are meant.

U1. Use of the system according to any of the preceding system embodiments for carrying out the method according to any of the preceding method embodiments.

The invention will now be described with reference to the accompanying drawings and exemplary embodiments, which are intended to exemplify, but not to limit, the present invention.
- Fig. 1: depicts a system in accordance with an embodiment of the present invention;
- Fig. 2: depicts a flow diagram in accordance with an embodiment of the present invention;
- Fig. 3: depicts a still further flow diagram relating to parts of the flow diagram generally depicted in Fig. 2;
- Fig. 4: depicts another system in accordance with an embodiment of the present invention, as well data structures employed in this embodiment; and
- Fig. 5: depicts a flow diagram corresponding to an embodiment of the present invention.

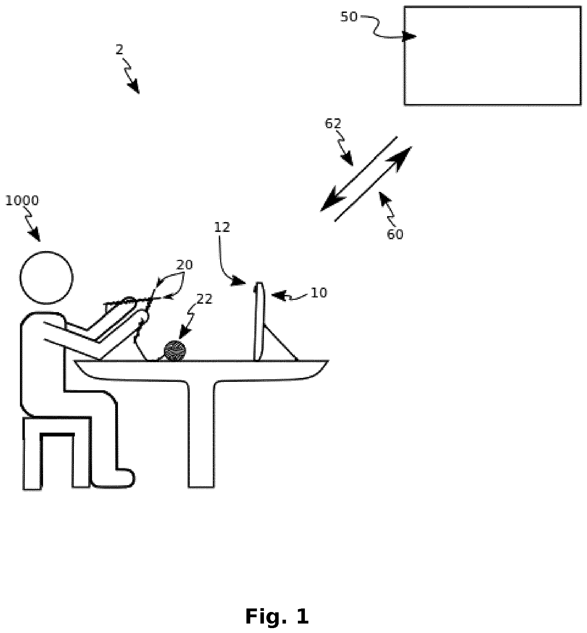

Fig. 1 depicts a user 1000 employing an embodiment of the present technology. More particularly, the user 1000 desires to perform a task, such as knitting a garment, e.g., a jumper.

In the depicted embodiment, there is provided a system 2 comprising a user terminal 10 and a camera 12, which may also be referred to as an image capturing device 12. The camera 12 may be a part of the user terminal 10, i.e., the user terminal 10 may comprise the camera 12. However, in other embodiments, the camera 12 may also be separate from the user terminal 10. The user terminal 10 may be, e.g., a private computer, a laptop, a smartphone, a tablet PC, or a smart speaker. The user terminal 12 comprises an output user interface for communicating information to the user 1000. The output user interface may comprise at least one of a display, a microphone, a headphone, and a speaker. While user terminal 10 and the camera 12, which, in the depicted embodiment is part of the user terminal 10, are depicted to be located on a table where the user 1000 performs their task, other configurations are also possible. That is, the user terminal 10 and/or the camera 12 may also be located at different locations, as long as the camera 12 has a field of view including the task. For example while knitting the preferred position of the camera could be hanging in front of the knitter's body at the height of the knitting task.

In very simple words, embodiments of the present technology relate to providing interactive instructions to the user 1000. As depicted, the user 1000 performs a task, e.g., a manual task, and more particularly knitting a garment. Very generally, embodiments of the present technology capture pictures of the task, determine a progress of the task and communicate instructions to the user, where the instructions depend on the progress of the task.

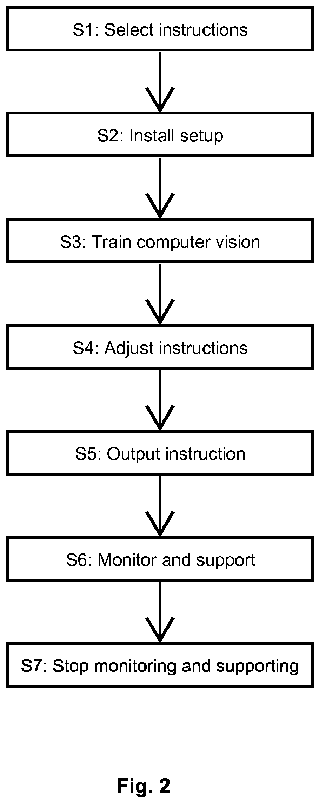

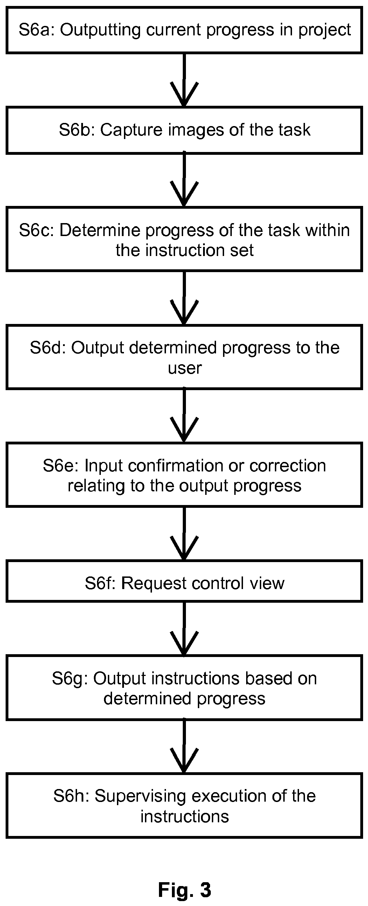

One concrete embodiment of the present technology will now be described in greater detail with reference to Figs. 2 and 3.

In a step S1, the user may select a set of instructions. More particularly, the system 2 may comprise a server 50 storing a plurality of sets of instructions. As a mere example, the server 50 may store one instruction set (which may also be referred to as a data set) relating to knitting a jumper, one instruction set relating to knitting a hat, and one instruction set to knitting a jacket.

The server 50 may communicate with the user terminal 10, e.g., by means of the internet, as illustrated by the arrows 60, 62, and the user terminal 10 may output (e.g., display) the sets of instructions to the user 1000. Thus, a library of available instruction sets may be displayed to the user 1000. The user 1000 may then select a particular instruction set (e.g., the instruction set "knitting a jumper"), i.e., they may open a new project with this instruction set. Alternatively, they may also select a saved older project, i.e., a project that they have already worked on.

Optionally, the user terminal 10 may also output a link to a purchase site and/or recommend new projects, i.e., instruction sets to the user 1000.

In a step S2, the user 1000 may position equipment for the selected instruction set with respect to the camera 12, i.e., the user 1000 may install a setup for the instruction set. In the described example, the user 1000 may position the knitting equipment, e.g., knitting needles 20 and knitting yarn 22 in front of the camera 12, such that the camera 12 can capture images of the knitting equipment. The camera 12 may be placed at any angle/perspective with respect to the equipment which is convenient and provides a good picture of the working progress.

More particularly, the sever 50 may communicate instructions relating to the setup to the user terminal 10 and the user terminal 10 may output such instructions to the user 1000.

In an optional step S3, a computer vision system may be trained to better "understand" the yarn 22 and the needles 20, e.g., their movement with respect to one another. This may be based on pattern recognition. Generally, the computer vision system may utilize artificial intelligence and/or neural networks to determine, e.g., based on previous results, a progress of the working process. The user terminal 12 may output instructions to the user 1000 instructing the user 1000 to knit a sample, and the user 1000 may knit such a sample. The camera 12 may capture this sample knitting process and the system 2 may determine knitting parameters, such as size, number of stitches, and number of rows. In this step, the system may also be trained to depict the material used (e.g. yarn character or color of the yarn, type of screw), the tools used (e.g. needles, screwdriver, spoon), and/or action performed (e.g. how stitches are made). Thus, the user terminal 10 may then also output all colors of yarn that are needed for the sample knitting process.

As discussed, the user 1000 may knit the predetermined sample, which may have a predetermined size, e.g., approximately 10 cm x 10 cm. The user terminal 10 may then output an instruction asking the user 1000 to enter parameters relating to the knitting of the predetermined sample. For example, the user terminal 10 may request the user 1000 to enter number of stitches and rows for knitting the sample and/or the actual size in cm of the prepared sample, and the user 1000 may input such parameters.

The user 1000 may input such parameters in a variety of ways by using an input user interface. The input user interface may be a touchscreen, a mouse, a microphone, or a keyboard. In some embodiments, the input user interface may coincide with the output user interface. Thus, the user 1000 may input parameters relating to the sample knitting process.

Such parameters may be transferred from the user terminal 10 to the server 50, which may comprise a progress recognition unit.

In an optional step S4, the user terminal 10 may output instructions instructing the user 1000 to input project parameters for the selected instruction set. The project parameters may include, e.g., a size and/or colors of the jumper to be knitted. The user 1000 may then input such project parameters into the user terminal 10 by using the input user interface.

The instruction set may be adjusted. The adjustment may be based on the parameters based on the sample knitting process and/or on the project parameters. It will be understood that the instructions constituting the instruction set will typically be different, depending on, e.g., a design of a model to be knitted, the size of the jumper to be knitted, chosen colors, and also based on the parameters relating to the sample knitting process (e.g., knitting tension).

The adjustment of the instruction set may be performed either locally on the user terminal 10, or on the server 50. In the latter case, the project parameters are sent from the user terminal 10 to the sever 50.

Thus, the instructions of the instruction set may be adjusted, and a linear process of a definite number of instructions may be generated. In case this is performed on the server 50, such a linear instruction set may be communicated from the server 50 to the user terminal 10.

The user 1000 may then begin with their project, e.g., with their knitting project. This may be accompanied with a step S5, wherein the system 2 and more particularly the user terminal 10 outputs (e.g., displays) an instruction. This instruction may be an initial instruction. In case of a knitting project, this instruction may relate to an instruction what is to be done when knitting the second row. When the initial instruction has been complied with (e.g., when the second row is knitted), the user 1000 may enter a confirmation into the system 2 and more particularly into the user terminal 10.

Furthermore, the method may also comprise a step S6, which may be referred to as a monitoring and supporting process or monitoring and supporting step. The monitoring and supporting step S6 may comprise different sub-steps that are depicted in Fig. 3.

In some embodiments, the monitoring and supporting step S6 comprises the sub-step S6a of outputting the user's current progress in the project. This outputting may be performed by the user terminal 10. E.g., in case of a knitting project, the current position (i.e., progress) of the user in the knitting project may be displayed by the user terminal 10. E.g., at the beginning of the project (e.g., a knitting project), the user terminal 10 may output a start point of the project. If a project is resumed after pausing the project, a restart position of the project may be output.

There may also be provided an option (e.g., for the user 1000) to adjust the progress output by the system 2. E.g., the progress that is output by the user terminal 10 may be erroneous. For example, in a knitting project, it may be possible that the user 1000 started the project under the supervision of the system 2 and that the system 2 captured the user's progress up to a certain point. However, it is possible that the user 1000 continued with the project afterwards, without being monitored by the present system 2. Such further unsupervised progress will then not be captured by the system 2. In this case, the user 1000 may have the option to adjust the progress as output by the system 2.

Furthermore, the user 1000 may also initiate that the further project (e.g., the knitting project) is captured by the camera 12, and the camera 12 may then capture images of the task (sub-step S6b). Thus, image data is generated by the system 2.

The generated image data (which may also be referred to as picture data or video data, in case a video is generated) may be transferred to a progress recognition unit. The progress recognition unit may determine the progress of the task with respect to the instruction.

E.g., in a knitting project, the number of stitches may be determined, the type of stitches (e.g., plain stitches, purl stitches) may be determined, and/or the shape (i.e., color) of the used yarn may be recognized. Further the progress recognition unit may also determine the visibility of the equipment used for the task (e.g., the knitting yarn 22 and the knitting needles 20 in case of a knitting task or knitting project). In case such equipment is not in the field of view of the camera 12, the user terminal 10 may request the user 1000 to reposition the equipment with respect to the camera 12.

In a further sub-step S6c, a progress of a task within the instruction set may be determined. That is, a location of the progress in the instructions may be determined. For example, this may be performed in a progress tracking system.

This may be done by means of pattern recognition. In some embodiments, a pattern recognition algorithm may be used. As described, embodiments of the present technology capture images, and more particularly, a series of images of a user performing a task, such as a user knitting a jumper. These images may then be used with a pattern recognition algorithm. The pattern recognition algorithm may, based on an image, determine the progress. Generally, the algorithm may search a given image or images for patterns (e.g., in a knitting process, patterns indicative of: number of stitches, number of rows, type of rows), which patterns may be indicative for the progress in the task. Thus, image contents may be recognized. As a mere example, this may be based on program libraries of openCV.

In other words, in embodiments of the present technology, there may be provided a database. In the database, there are stored patterns each one corresponding to different steps of a particular task (e.g., a knitting task). For a given image, the presence of such patterns may be determined and it may thus be determined to which step a given image corresponds.

When knitting there are many identical or similar steps that follow each other. E.g. when executing the instruction "knit 10 plain stitches" there will be 10 identical sub steps of knitting a plain stitch. Each individual sub step may consist of different parts of action (phases) that needs to be executed. E.g. in order to make a stitch one needle must be pushed through the loop/stitch on the other needle (phase 1), the thread must be wrapped around the needle (phase 2) and the thread must be pulled through the loop/stitch on the second needle (phase 3) and the loop/stich must be pulled off from the second needle (phase4).

Generally, the determination of a task within the instruction set may be done according to different examples.

In a first example, the determination may be based on an image of the complete project (e.g., of the complete knitting piece prepared so far). Patterns may be recognized on the complete image and thus a progress may be determined.

In a second example, a working step that only occurs once in the instruction set may be clearly determined. As a mere example, if in a knitting project, there is a stitch where 3 stitches are joined, and this configuration only occurs once in the knitting project, this may be clearly determined. A further example may relate to a handicraft project which comprises the step of folding a sheet of paper in a particular way. Again, if such a step only occurs once in the task, it may be used to determine the progress of the task.

In a third example, only a portion of the project needs to be captured in an image to obtain information about the progress with respect to an instruction set. For example, if a screw needs to be screwed in at a particular location of a piece of furniture, and the particular location is defined by the shape of the furniture, it may be sufficient to only provide an image of this particular location of the piece of furniture.

In a fourth example, an image is used allowing the progress in the task to be determined, if the progress at preceding times was determined. For example, in a knitting task, if an image includes stitches and from previous images it is known that the user is currently in row 7, one may determine the progress of the user. This may also be referred to as pattern recognition from one picture based on tracking the progress of the previous work.

The above examples 1 to 4 may also be referred to as "static determination", as a single image is used for the determination of the progress.

In a still further fifth example, individual phases of the project may be determined (it will be understood that this should also be encompassed by the requirement that a step is determined). For example, in a knitting project, knitting a row may be such a phase. In such a determination, a plurality of images is used (i.e., a section of a video) for the determination, and the plurality of images is used to determine a phase of phases that are ordered one after another. The plurality of images may, e.g., be analyzed by using neuronal networks.

In one variant of the fifth example, one may also use a determined combination of phases to determine a progress of the user. For example, if it is determined that there is phase of knitting a row followed by changing the color of a yarn, and such a combination of instructions is only present once in the instruction set, the progress of the user may thus be determined.

In this variant, for example, the system may "learn" to determine such phases. For example, if an image is matched with a phase, the phase may be considered as executed. If a sequence of certain phases has been executed, it may be determined that a particular step has been executed. As a mere example, in a knitting task, if the phases piercing the needle, getting the yarn, pulling through the yarn, and removing the stitch (which may also be referred to as a loop) from the needle, have been identified, the system may determine that a stitch has been knitted.

Further, in this variant, the system may also "learn" to determine such phases in a different manner. E.g., when one or more images with capture times CT-2, CT-1, CT, etc. are matched with a phase, the phase may be considered as executed. Again, a sequence of different such phases may be used for determining a step (e.g., that a stitch has been knitted).

Still further, in this variant, artificial intelligence, e.g., artificial neural networks (e.g., deep convolutional neural networks) may be used to determine such phases by means of action recognition in the videos. In such versions, a sequence of images (e.g., a section of a video) is used and such phases or actions are thus determined.

In a further variant of the fifth example, continuously determining the progress based on the above phases may be used. This may be particularly useful for tasks with repetitive steps or phases, such as, knitting, where different working steps are repeated and counted.

In a sixth example, moving rhythms may be recognized by processing a plurality of images (e.g., a section of a video). Generally, in such images, lines may be generated, their change between (subsequent) images may be determined, and a "rhythm", i.e., an interval between corresponding positions may be determined. Subsequent images may be processed according to this "rhythm". For example, in a knitting project, the number of stitches that have been knitted can thus be determined. That is, such an example employs a pattern recognition based on a sequence of images.

The above discussed fifth and sixth example relate to the determination based on a plurality of images, such as sections of a video. They may thus be referred to as "dynamic" determination,

In the fifth and sixth example, the phase or rhythm recognition can be based on image recognition which is based on different aspects. For example, in a knitting project, the constellation between the needles and the yarn may be determined (e.g., by convolutional neural networks). Additionally or alternatively, the constellation between the hands and the finger may be determined (e.g., by convolutional neural networks). As an example, different positions and/or degrees of rotations (e.g., between needles, hands, and/or fingers) may be used, e.g., by image processing.

In do-it-yourself applications, tools, hands, parts, auxiliary devices (e.g., parts of shelf or pins), and their angles and/or rotations may be used. In cooking/baking applications, ingredients, hands, auxiliary devices (e.g., pots, spoons, egg whips) and their angles and/or rotations may be used.

To further improve the accuracy of such a process, it may also be possible that for determining to which step a particular given image belongs, not only this image is utilized, but also images that have been taken beforehand. That is, the step of determining a progress in the instruction set may not only determine the progress at a given time by a single image shot at this given time, but may also take previous images (or the determination of the progress for such previously captured images) into account. This may render the respective step even more failsafe.

In some embodiments, fixed algorithms may be used, searching for pre-determined patterns in the images. However, other embodiments may not employ fixed, i.e., predetermined algorithms, but may employ artificial intelligence tools, and particularly neural networks. In such embodiments, the system may be trained by using numerous training images, and may later, based on the training images, determine a progress of a user in a task. As a mere example, the system may be trained with some few (e.g., 10) and up to 10,000 (e.g., 300) images of a user during a knitting process and the images may be annotated, i.e., the system may be fed with additional information what is depicted on such images. E.g., the additional information may relate to the yarn color used, the number of stitches, and/or the number of rows visible in a picture. The additional information may further relate to: different phases in the process of performing the task/making a new stitch, and particularities of the type of stitch being made. After being trained with such annotated images, the system may then be able to determine a user's progress for a given image or series of images. That is, the recognition of the progress may result from analysis of a single image, but may also result from analysis of a series of images that show different stages of the process. E.g., in a knitting project, only upon completion of all stages of the process the stitch is completed and a corresponding data portion is marked as performed. Also in such embodiments, the system may employ pattern recognition, however, the patterns would then be identified by the system itself.

In a still further sub-step S6d, the progress determined in the previous step may be output to the user 1000, e.g., by means of the user terminal 10. E.g., in case of a knitting project, there may be given feedback to the user 1000 about where they are in the knitting project at a given moment. As a mere example, the user terminal 10 may output an information such as "You are presently at stitch 24" or "You are presently at the end of the second row". It will be understood that the progress may be output at specific pre-determined instances, e.g., in a knitting project, at the beginning of a new row, or a pre-determined number of stitches (e.g., 5 to 10 stitches) before a change (such as a change of the yarn color or the type of stitches) occurs. In one embodiment, the system 2 may also output a countdown before such a change occurs (e.g., "Number of stitches before change to plain stitches occurs: 5, 4, 3, 2, 1").

It will be understood that in some instances, the determination of the progress of the task in sub-step S6c, which is output to the user 1000 in sub-step S6d, may be erroneous. Thus, in an optional sub-step S6e, the system 2 and more particularly the user terminal 10 may allow the user 1000 to input a confirmation or a correction relating to the progress that has been determined and output by the system 2. Such an information may then be fed back to the progress tracking system. Such information can also be communicated to the server 50 together with information about the process and may allow the system 2 to be optimized for further usage.

In a further optional sub-step S6f, the user terminal 10 may output a request for a control view onto the project. E.g. the user terminal 10 may request the user 1000 to position the equipment (e.g., a partly knitted jumper) in a specific way with respect to the camera 12 to thus capture the progress in a pre-determined manner. Thus, e.g., the number of stitches on each needle 20 may be counted.

The sub-steps described above may all help to determine the progress in a project or task, or to improve such a determination. Once the progress in a project or task (e.g., in a knitting project) has been determined, the system 2 and more particularly the user terminal 10 may output instructions depending on the determined progress of the user 1000 in the task (sub-step S6g). That is, the system 2 may generate such instructions once the "location" in the project is certain. Mere examples of such an instruction in a knitting project are "Another 15 stitches to finish this row", "Continue for 6 stitches with the color red and switch to green after that", "Now switch to green", "Use the green yarn and make 15 stitches". Optionally, the user terminal 10 may also display supporting pictures or video sequences to show to the user 1000 how to correctly perform the next step.

In a further sub-step S6h, the system 2 may supervise the execution of the instructions, i.e., whether the user 1000 complies with the instructions. More particularly, again, the execution of the task or project is captured by means of the camera 12, and the generated image data may be transferred to a progress recognition unit. It may be compared whether the latest instruction has been complied with, i.e., the step actually performed by the user 1000 and captured by camera 12 may be compared with the instruction output to the user 1000 in sub-step S6g.

In case the user 1000 complied with the instruction, the system 2 and more particularly the user terminal 10 may output positive feedback to the user 1000, i.e., a green checkmark indicating correct execution of the instructions.

In case the user 1000 does not (or does not fully) comply with the instruction output in sub-step S6g, the system 2 may recognize this based on the image data and may output (e.g., by means of the user terminal 10) a corrective feedback.

More particularly, the system 2 may check the execution of task for different characteristics. E.g., in case of a knitting project, the system 2 may, based on the image data, check the characteristics color of yarn, type of stitches, and number of stitches.

E.g., if the instruction output in sub-step S6g is "15 plain stitches with the red yarn", the user 1000 may not comply with such an instruction in a variety of ways. E.g., they may use another color than red, they may not do plain stitches, or they may perform more (or less) than 15 stitches. The system 2 determines whether any of these characteristics of the instruction has not been complied with. In case the user 1000 has not complied with any such characteristic (i.e., if they have made a mistake), the system 2 can thus identify the type of mistake. Again, in case of a knitting project, the types of possible mistakes include usage of a wrong yarn color or type of stitch or too many or too few stitches (of the correct color or type of stitch).

In case it is determined that the user 1000 has not complied with an instruction (i.e., has made a mistake), as discussed, the type of this mistake may be determined. Based on the determination of the mistake, the system 2 may generate a corrective instruction. Again with exemplary reference to a knitting project, examples of corrective instructions may include "Undo 6 number of stitches" or "Continue and apply a correction to the next row". The corrective instruction may then be output by the user terminal 10.

Optionally, the system 2 and more particularly the user terminal 10 may also display pictures of video sequences showing to the user how such a correction is done and/or how to correctly comply with a certain instruction.

Again, the system 2 constantly captures images of the user 1000 performing the task, and thus also while the user 1000 performs the correction indicated by the corrective instruction. The system 2 may then also determine if the mistake has been corrected. Alternatively or additionally, the user 1000 may also input the completion of the correction into the user terminal 10.

After a correction has been registered by the system 2 (either by means of the images captured or by means of a user 1000 indicating that a correction has been done), the system 2 may continue to capture images of the task and check whether the instructions are complied with.

The sub-steps S6a to S6h are (partly optional) sub-steps of the overall step S6 relating to monitoring and supporting the user 1000 while performing their task. This monitoring and supporting step S6 may be stopped or halted in a step S7 (see Fig. 2) in a variety of ways. The user 1000 may input a corresponding stop command into the user terminal 10, e.g., by means of an input user interface.

Furthermore, as discussed, the system 2 constantly captures images of the user 1000 performing the task, and these images are constantly analyzed. Based on these images, the system 2 may also recognize that the user 1000 has stopped execution of the task (e.g., if the system 2 identifies that no progress has been made in a pre-determined time interval). This may also trigger the monitoring and supporting process to be stopped.

When the monitoring and supporting step is stopped (S7), the current position in the project, i.e., the current position in the instruction set is captured or saved. Optionally, the user terminal 10 may also output an instruction to position the equipment in a defined manner with regard to the camera 12. This may enable a control view on the project (e.g., the knitting) and the system 2 may thus be able to further check the progress of the project, e.g., to count the stitches on a needle 20 in case of a knitting project.

It will be understood that the progress of the task may then also be saved, i.e., that the status of the work may be saved by the system 2, for future reference. This may then serve as a restart point when the project is resumed later. Further, based on this, the progress may also be evaluated, and one may reward the user 1000 for the work performed. Further, one may also provide statistics relating to the user and/or to the current project.

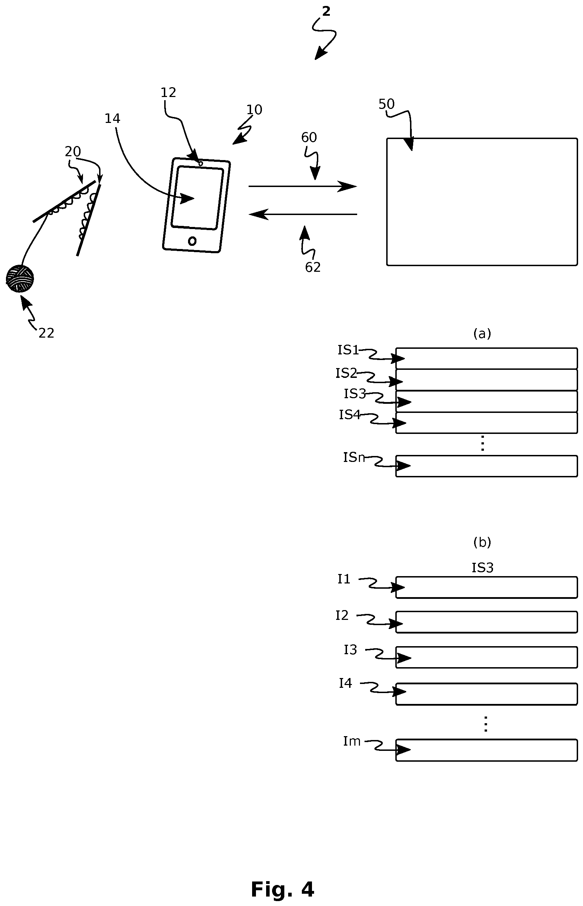

Further details of embodiments of the present invention will now be described with reference to Fig. 4. Figure 4 again depicts a user terminal, which is here realized as a tablet PC. Figure 4 again exemplarily relates to a user performing a knitting task, though this is merely exemplary.

Figure 4 also depicts a server 50, which may communicate with the user terminal 10, and the communication between the two is exemplarily illustrated by arrows 60, 62. It will be understood that both the server 50 and the user terminal 10 may both send and receive data, e.g., via the internet.

When the user intends to start with a knitting project, they may use their user terminal 10. The user terminal 10 may comprise a user interface 14. In the present embodiment, the user interface 14 is realized as a touch sensitive display (though it will be understood that other user interfaces, such as microphones and/or a haptic keyboard may also be employed). By means of the user interface 14, the user may input information, e.g., an instruction, into the user terminal 10. If intending to start a new task or project, the user may thus input such an information by means of the user interface 14 into the user terminal 10. More particularly, e.g., the user may use the user terminal 10 to access a website, though this is merely exemplary.

Thus, a connection may be established between the user terminal 10 and the server 50. The server 50 may comprise a data processing unit. It will be understood that this is merely exemplary, and that in other embodiments the user terminal 10 may comprise the data processing unit. The data processing unit may comprise a data storage section comprising a plurality of data sets IS1 to ISn (see Fig. 4 (a)), which data sets IS1 to ISn may also be referred to as instruction sets. In other words, each instruction set may correspond to an instruction manual. Each such data or instruction set IS1 to ISn relates to a specific task, e.g., IS1 relates to knitting a hat, IS2 relates to knitting a cardigan, IS3 relates to knitting a jumper, and so on. When a connection between the server 50 and the user terminal 10 is established, the instruction sets IS1 to ISn may be displayed to the user by means of the user terminal 10. The user may then select an instruction set, e.g., instruction set IS3 relating to knitting a jumper.

Each instruction set IS1 to ISn, and thus also instruction set IS3 may comprise a plurality of instructions I1 to Im (see Fig. 4 (b)), which may also be referred to as or may correspond to data portions. An exemplary first instruction I1 could be "For the second row, use red yarn and make 10 purl stitches".

It should be understood that the individual instructions I1 to Im may have different granularities. In the above described example, the first instruction "For the second row, use red yarn and make 10 purl stitches" relates to one step comprising different steps (e.g., 10 individual stitches). Thus, the described steps I1 to Im may also be "composite steps" made of a plurality of individual sub steps. It will further be understood that the individual sub steps may also comprise individual sub actions. For example, when the sub step is a single stitch, it may comprise individual sub actions, such as piercing, getting the yarn, pulling through the yarn, and removing a loop from the needles. It will be understood that depending on the concrete project (and expertise of the user), the provided instructions I1 to Im may relate to individual sub actions, sub steps, and/or composite steps. All this should be understood to be encompassed by the present disclosure.

When the user has selected an instruction set, such as instruction set IS3, in one embodiment, the user terminal 10 may load, e.g., download, this instruction set IS3 with the steps of instructions I1 to Im (however, in some other embodiments, such a download is not necessary, in particular, when there is a continuous connection between the user terminal 10 and the server 50). Independent of whether the instruction set IS3 has been downloaded or not, the user terminal 10 may then have access to it.

The user terminal 50 may then output the first instruction, e.g., "For the second row, use red yarn and make 10 purl stitches", to the user. It may do this in a variety of ways. Generally, the user terminal 50 may comprise an output user interface for communicating such an instruction to the user. The output user interface may be a display, and in the depicted embodiment, may be the described touch sensitive display 14. The user terminal 10 may thus display the instruction I1 to the user. However, in other embodiments, other means may be used to output the instruction I1 to the user. For example, the user terminal 10 may comprise a speaker and may use this as the output user interface. Depending on the task to be performed, this could be advantageous, as the user may not need to look at the user terminal 10 and may thus use their vision for the task to be performed without the user's vision being distracted by the instructions. In any case, the instruction I1 may be output to the user.

The user may then start to perform their task. In the depicted embodiment, the task may be a knitting task, and thus a knitting yarn 22 and knitting needles 20 are depicted, which may generally be referred to as "task equipment". The user may start performing the task by using the task equipment 20, 22.

While doing so, i.e., while performing the task (e.g., knitting), images of the task are captured by a camera 12, which camera 12 may be part of the user terminal 10. It will be understood that in embodiments of the present technology, it is also ensured that a sufficient portion of the task equipment 20, 22 is in the field of view of the camera 12. Generally, images of the task are captured by the camera 12.

These images are further analyzed. In some embodiments, this analysis is done locally on the user terminal 10. In other embodiments, this analysis is done externally, i.e., on the server 50.

Independent of where this analysis is performed, it comprises processing the captured images. In simple terms, the images are processed to determine where in the respective instruction set IS3 the user currently is.

In particular, embodiments of the present technology determine, based on the captured images, whether the user performing the task is still at a progress corresponding to instruction I1 or not. Again, in the discussed example, the first instruction I1 may be "For the second row, use red yarn and make 10 purl stitches".

The presently described method may thus process the captured images to determine whether the user is still knitting the second row and how many stitches they have performed. This may be done by using pattern recognition, e.g., a pattern recognition algorithm. Thus, patterns in the captured images may be recognized to determine the progress of the user. As a mere example, algorithms of the openCV libraries may be employed. Implementations may use some part of programs or use the technology of Yolo, Darknet, tinyYolo, CoreML, Python, and/or Caffe toolbox.

Thus, the user's progress may be determined. As long as it is determined that he user's progress corresponds to the first instruction, the first instruction may be output to the user.

However, once it is determined that the user has completed the step corresponding to the first instruction (or closely before completion of the first instruction, e.g., 3 to 5 stitches before the end of the second row), the present technology may determine this and change the instruction output to the user accordingly.

E.g., the second instruction 12 may be "For the third row, use black yarn and make 10 plain stitches". As a mere example, this instruction may be output to the user when they have completed the second row (or closely before such completion). In the latter case, it is also possible that the present technology more particularly instructs the user, e.g., by providing a countdown before the next instruction 12 applies.

The above rationale may then apply to the whole process, project, or task the user is performing. That is, in very general words, embodiments of the present technology monitor the performed task, i.e., capture images thereof, and automatically determine the progress of the task. Depending on the determined progress of the task, the instructions that are output to the user are given. More particularly, only the instruction that presently applies may be output to the user. This may be advantageous, as the user may focus their attention on the actual task to be performed, without their attention being captured by determining their progress in an instruction.

It will be understood that embodiments of the present technology may also allow the user to pause the described method. E.g., when a user wants to interrupt their project, e.g., their knitting project, they can input this to the user terminal 10, and the project may then be halted, and restarted at the respective point at a later time.

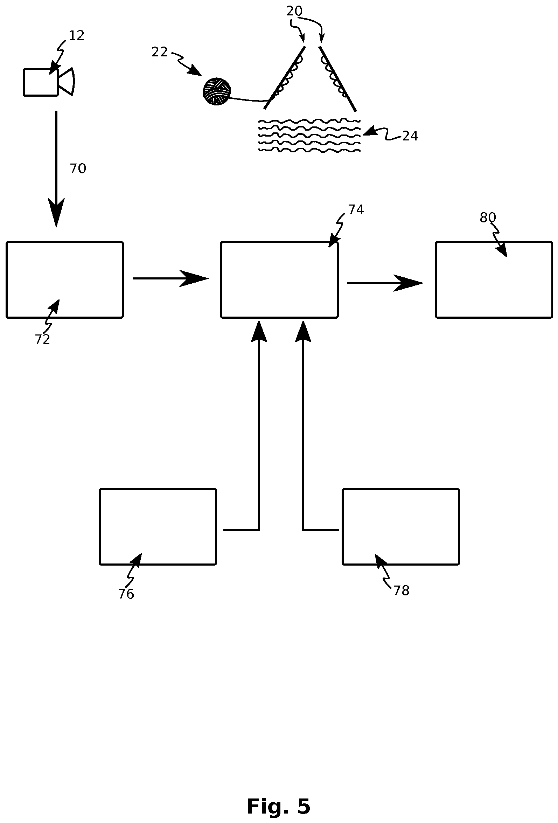

Fig. 5 is a very conceptual schematic representation of an embodiment of the present invention. Very generally, the embodiment again relates to a method for identification of progress while doing a task, e.g., handicrafts (such as knitting, crocheting and the like). Again, the task is identified by respective equipment, which is here realized as knitting needles 20 and knitting yarn 22. The task may be the generation of a garment 24, e.g., a jumper. Again, a camera 12, which may be part of a user terminal 10, captures images of the task and thus generates image data 70. The image data 70 is sent to a data processing system 72. As discussed, such a processing system 72 may be part of a user terminal 10 and/or of an external server 50. The processing system 72 may sent data to a control and navigation system 74, which also has access to an instruction 76 (e.g., a set of instructions stored in a data base). Further, the control and navigation system 74 may also receive additional user input 78, e.g., input registering corrections of the user. All these inputs may be processed in the control and navigation system 74 to generate an output 80, which may by an output including user instructions and/or status information on the task.

Again, this embodiment generally relates to a method for identification of progress while doing a task, such as a handicraft task (e. g. knitting, crocheting and the like) based on image or video data 70, which are recorded by a camera 12 (e.g., of a user terminal) and the continuous instruction of the person doing handicrafts as regards the subsequent steps in knitting or crocheting depending on his/her work progress. The image or video data 70 may be used to record a quantity of work steps such as e.g. a number of stitches on a knitting needle 20, or in order to record an individual work step, such as e.g. by tracking the movements of the needles 20 and the yarn 22 in creating a new stitch. Instructions 76 for creation of handicrafts (such as knitting or crocheting work) represent the description of the method to be tracked by the persons doing handicrafts. These instructions 76 are typically provided by the system and transferred to the control and navigation system 74, which may also be referred to as the processing unit 74, to thus permit the work progress to be located in the instructions 76. Recording of the work steps with camera 12 and by using the processing system 72 are utilized to position/track the progress of the work within the instructions. The control and navigation system 74 records the work progress as it occurs and positions it in the instructions.

The user is informed about their progress via visual display and/or auditive announcements, i.e., by the output 80.

It will be understood that any of the described embodiments may malfunction, i.e., not correctly locate the user's progress in the task. For example, the user may be outside the range of vision of the camera 12 and/or work may be performed when the system is not operating (e.g., outside of the operating hours of the image recording unit). In such instances, the user may update or adjust the progress status on a user interface of the user terminal by means of an additional user input 78.

In line with the progress or positioning in the work, the next upcoming work steps are indicated and/or announced by output 80 to the user based on the instructions. Such announcement might be, for example: "now knit another 4 stitches in red and then knit the following 15 stitches in white" or "knit another 2 plain stitches, then increase with one purl stitch".

Again, it is also possible to display images or video sequences which illustrate the precise course of action visually to the user.

While in the above, preferred embodiments have been described with reference to the accompanying drawings, the skilled person will understand that these embodiments were provided for illustrative purpose only and should by no means be construed to limit the scope of the present invention, which is defined by the claims.

Furthermore, while in the above, different aspects were discussed with reference to different Figures, it should be understood that these aspects can also be readily combined with one another. E.g., the user terminal 10 depicted in Figures 1 and 4 may be employed in the method discussed in conjunction with Figures 2 and 3. Further, with regard to Figures 2 and 3, a particular process comprising a plurality of steps and sub steps has been described. It will be understood that these steps and sub steps may also be employed with the system and method generally described with reference to Figs. 1, 4 and/or 5.

It will be understood that the present technology may employ computer vision (CV) technologies. CV technologies relate to methods and tools that are directed at gaining high level understanding of digital images or video. Understanding in this context means the transformation of visual images into descriptions of the world that can interface with other thought processes and elicit appropriate action. Computer vision is concerned with the theory behind artificial systems that extract information from images and with the automatic extraction, analysis and understanding of useful information from a single image or a sequence of images. Generally, the realisation of extraction and analysis of the visual information may rely on systematic explicit algorithms and/or may use Artificial Neural Networks (ANN) and particularly the convolutional neural networks (CNN).

Generally, in order to determine the execution of a given step in a task the present technology may also comprise methods developed in the field of action recognition in order to determine the full execution of the given step, which may be different from the elicitation of the execution by identifying the phases and their completion.

While in the above, particular embodiments relating to instructing a user performing a task have been described, it should be understood that the present technology may also be used to capture images of a user performing a task (which may be unknown to the system) and to thus generate a manual, i.e., an instruction set, based on this.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

## Claims

1. A method of instructing a user (1000) performing a handcraft task, the method comprising
capturing images while the user (1000) performs the task, and
a user terminal (10) outputting instructions to the user (1000),
wherein the output instructions depend on the captured images.

2. The method according to claim 1, wherein the method further comprises
a data processing unit processing image data relating to the captured images; and the data processing unit determining a progress of the user (1000) in the task based on the processed image data;
wherein the output instructions depend on the determined progress of the user (1000).

3. The method according to the preceding claim,
wherein the data processing unit comprises a data storage section comprising a data set corresponding to the task, the data set comprising data portions each corresponding to a step of the task,
wherein the step of determining a progress of the user (1000) in the task comprises matching the image data to a data portion in the data set.

4. The method according to the preceding claim, wherein the step of matching the image data to a data portion in the data set comprises utilization of artificial intelligence and/or a neural network, and/or wherein this step comprises action recognition.

5. The method according to any of the preceding 2 claims, wherein in the step of matching image data to a data portion in the data set, image data corresponding to an image captured at a capture time is matched to a data portion in the data set by taking into account
the image data corresponding to the image captured at the capture time, and image data corresponding to an image captured before said capture time.

6. The method according to any of the preceding 4 claims, wherein the user terminal (10) comprises the data processing unit.

7. The method according to any of the claims 2 to 5, wherein a server (50) external to the user terminal (10) comprises the data processing unit.

8. The method according to any of the preceding claims with the features of claim 2, wherein the images are captured by a camera (12), wherein the method further comprises the user terminal (10) outputting a positioning instruction instructing the user (1000) to position themselves and/or equipment used for the task in a field of view of the camera (12), and wherein the method further comprises the data processing unit determining whether the image data is sufficient for further processing and wherein the positioning instruction is output if the image data is not sufficient for further processing.

9. The method according to any of the preceding claims with the features of claim 2, wherein the method further comprises the user terminal (10) outputting a status information to the user (1000), wherein the status information depends on the captured images, wherein the method further comprises
the user terminal (10) receiving a dissenting input indicating that the output status is incorrect, and wherein the status information depends on the determined progress of the user (1000).

10. The method according to any of the preceding claims with the features of claim 7, wherein the method further comprises
capturing images while the user (1000) performs a defined calibration task;
the user terminal (10) receiving a user input relating to parameters of the defined calibration task; and
wherein at least some images captured while the user (1000) performs the defined calibration task are transferred to the server (50) and are used to train a neural network to recognize an execution of the instruction.

11. The method according to any of the preceding claims and with the features of claim 3,
wherein the method further comprises determining the presence of an error based on the image data and the data set; and
the user terminal (10) outputting an error message and/or a correction instruction to the user (1000).

12. The method according to any of the preceding claims, wherein the user terminal (10) outputs a plurality of instructions to the user (1000), which output instructions depend on the captured images, and wherein the method further comprises
interrupting outputting the plurality of instructions at an interrupting instruction, and
resuming outputting of the plurality of instructions at the interrupting instruction or at an instruction following the interrupting instruction.

13. The method according to any of the preceding claims and with the features of claim 3,
wherein the data storage section comprises a plurality of data sets, wherein each data set corresponds to a separate task, respectively, and each data set comprises data portions, wherein each data portion corresponds to a step of the respective task,
wherein the method further comprises the user terminal (10) receiving a user input relating to a selection of one of the plurality of data sets.

14. A system (2) configured for carrying out the method according to any of the preceding claims, wherein the images are captured by a camera (12), wherein the system (2) comprises
the user terminal (10), and
the camera (12),
wherein the user terminal (10) comprises the camera (12).

15. Use of the system according to the preceding claim for carrying out the method according to any of the claims 1 to 13.

## Amended claims

### Amended claims in accordance with Rule 137(2) EPC.

1. A method of instructing a user (1000) performing a handcraft task, the method comprising
capturing images of the user (1000) performing the task, and
a user terminal (10) outputting instructions to the user (1000),
wherein the output instructions depend on the captured images, wherein the method further comprises
a data processing unit processing image data (70) relating to the captured images; and
the data processing unit determining a progress of the user (1000) in the task based on the processed image data, wherein determining the progress comprises determining a phase of the task;
wherein the output instructions depend on the determined progress of the user (1000).

2. The method according to the preceding claim,
wherein the data processing unit comprises a data storage section comprising a data set corresponding to the task, the data set comprising data portions each corresponding to a step of the task,
wherein the step of determining a progress of the user (1000) in the task comprises matching the image data (70) to a data portion in the data set.

3. The method according to the preceding claim, wherein the step of matching the image data (70) to a data portion in the data set comprises utilization of artificial intelligence and/or a neural network, and/or wherein this step comprises action recognition.

4. The method according to any of the preceding 2 claims, wherein in the step of matching image data (70) to a data portion in the data set, image data (70) corresponding to an image captured at a capture time is matched to a data portion in the data set by taking into account
the image data (70) corresponding to the image captured at the capture time, and image data (70) corresponding to an image captured before said capture time.

5. The method according to any of the preceding claims, wherein the user terminal (10) comprises the data processing unit.

6. The method according to any of the preceding claims, wherein a server (50) external to the user terminal (10) comprises the data processing unit.

7. The method according to any of the preceding claims, wherein the images are captured by a camera (12), wherein the method further comprises the user terminal (10) outputting a positioning instruction instructing the user (1000) to position themselves and/or equipment (20, 22) used for the task in a field of view of the camera (12), and wherein the method further comprises the data processing unit determining whether the image data (70) is sufficient for further processing and wherein the positioning instruction is output if the image data (70) is not sufficient for further processing.

8. The method according to any of the preceding claims, wherein the method further comprises the user terminal (10) outputting a status information to the user (1000), wherein the status information depends on the captured images, wherein the method further comprises
the user terminal (10) receiving a dissenting input indicating that the output status is incorrect, and wherein the status information depends on the determined progress of the user (1000).

9. The method according to any of the preceding claims with the features of claim 6, wherein the method further comprises
capturing images while the user (1000) performs a defined calibration task;
the user terminal (10) receiving a user input relating to parameters of the defined calibration task; and
wherein at least some images captured while the user (1000) performs the defined calibration task are transferred to the server (50) and are used to train a neural network to recognize an execution of the instruction.

10. The method according to any of the preceding claims and with the features of claim 2,
wherein the method further comprises determining the presence of an error based on the image data (70) and the data set; and
the user terminal (10) outputting an error message and/or a correction instruction to the user (1000).

11. The method according to any of the preceding claims, wherein the user terminal (10) outputs a plurality of instructions to the user (1000), which output instructions depend on the captured images, and wherein the method further comprises
interrupting outputting the plurality of instructions at an interrupting instruction, and
resuming outputting of the plurality of instructions at the interrupting instruction or at an instruction following the interrupting instruction.

12. The method according to any of the preceding claims and with the features of claim 2,
wherein the data storage section comprises a plurality of data sets (IS1 to ISn), wherein each data set corresponds to a separate task, respectively, and each data set comprises data portions, wherein each data portion corresponds to a step of the respective task,
wherein the method further comprises the user terminal (10) receiving a user input relating to a selection of one of the plurality of data sets.

13. A system (2) configured for carrying out the method according to any of the preceding claims, wherein the images are captured by a camera (12), wherein the system (2) comprises
the user terminal (10), and
the camera (12),
wherein the user terminal (10) comprises the camera (12).

14. Use of the system according to the preceding claim for carrying out the method according to any of the claims 1 to 12.
